# FASCICULE DE BREVET EUROPEEN

(11) **EP 3 179 291 B1**
(45) Date de publication et mention de la délivrance du brevet: **07.04.2021**
(21) Numéro de dépôt: 16200739.7
(22) Date de dépôt: 25.11.2016
(51) Int. Cl.: G02B 27/01, G01C 23/00

(54) **PROCEDE D'AFFICHAGE D'UN " INDICATEUR DE DIRECTEUR D'ATTITUDE " DANS UN SYSTEME DE VISUALISATION DE TETE POUR AERONEF**
ANZEIGEVERFAHREN EINES INDIKATORS FÜR DAS VERHALTENSMANAGEMENT IN EINEM HEAD-UP-ANZEIGESYSTEM FÜR LUFTFAHRZEUG
METHOD FOR DISPLAYING AN ATTITUDE CONTROL INDICATOR IN A HEADS-UP DISPLAY SYSTEM FOR AN AIRCRAFT

(30) Priorité: 09.12.2015 FR 1502562
(43) Date de publication de la demande: 14.06.2017
(73) Titulaire: Thales, 92400 Courbevoie (FR)
(72) Inventeur: SACHEAU, Romain, 33187 LE HAILLAN Cedex (FR); AYMERIC, Bruno, 33187 LE HAILLAN Cedex (FR); BARREAU, Jonathan, 33187 LE HAILLAN Cedex (FR)
(74) Mandataire: Marks & Clerk France

(56) Documents cités:
- EP-A2- 2 131 153
- EP-A2- 2 360 452
- WO-A1-95/27186
- WO-A2-03/064976

## Description

Le domaine de l'invention est celui des systèmes de visualisation portés par la tête d'un utilisateur pour des applications aéronautiques.

Ces systèmes sont utilisés dans les cockpits d'aéronefs civils et militaires pour présenter au pilote des informations essentielles concernant le pilotage ou la navigation. L'affichage des informations est fait en superposition sur le paysage extérieur. Ces systèmes sont connus notamment sous le terme anglais de « See-through HMD », « HMD » étant l'acronyme de « Head Mounted Display ». Ils peuvent être monoculaires ou binoculaires.

Le document EP 2 360 452 A2 décrit un ensemble de méthodes et de systèmes pour afficher un symbole représentatif de l'attitude d'un aéronef en vol et correspondant à l'état de l'art antérieur à l'invention.

Ce type de système comporte toujours deux sous-ensembles principaux, le système de visualisation proprement dit et un système de détection de posture permettant de parfaitement connaître la posture de la tête de l'utilisateur par rapport à un référentiel connu. Ainsi, il est possible d'afficher des informations dans une zone parfaitement déterminée de l'espace.

Le système de visualisation comporte principalement un micro-imageur qui génère une image synthétique, une optique-relais et un combineur ou mélangeur optique qui permet de superposer l'image issue de l'optique-relais sur le paysage extérieur.

Il existe différentes techniques permettant de repérer un objet dans l'espace. On peut utiliser la détection électromagnétique. Un émetteur est disposé dans le repère fixe et un récepteur dans le repère mobile. On peut également utiliser la détection optique qui peut être passive ou active. Dans ce dernier cas, le dispositif de visualisation porte des diodes électroluminescentes dont la position de l'émission est repérée par des caméras. Toutes ces techniques sont connues de l'homme du métier. Elles sont compatibles d'un fonctionnement en temps réel et s'adaptent facilement au système de visualisation selon l'invention.

L'un des avantages de ce type de système est qu'il est possible de présenter des informations, notamment de symbologie, en position conforme, c'est-à-dire parfaitement superposées avec la position qu'elles occuperaient sur le paysage extérieur. Ainsi, il est possible de présenter les informations de base du pilotage parfaitement superposées sur l'extérieur. Classiquement, ces informations sont rassemblées dans une vue connue sous la terminologie « ADI », acronyme signifiant « Attitude Director Indicator ». Basiquement, cette vue comporte une maquette avion représentant symboliquement l'appareil et une symbolique représentant l'attitude et la vitesse de l'appareil en roulis et tangage par rapport à un référentiel terrestre. Cette symbolique comprend au moins une ligne d'horizon artificiel et une échelle de roulis. On comprend que, pour que cette symbologie soit facilement interprétable, elle doit se situer dans l'axe de l'aéronef. Lorsqu'une configuration ADI est présentée sur un « See-through HMD », il inclut également un symbole appelé « Vecteur Vitesse » ou « Flight Path Vector » en terminologie anglo-saxonne, connu sous l'acronyme « FPV ». Ce symbole représente la trajectoire de l'avion, c'est-à-dire la direction vers laquelle l'aéronef se dirige instantanément. Il représente donc les paramètres de route ou « track », connu sous l'acronyme « TRK » et de pente ou « Flight Path Angle » en terminologie anglo-saxonne, connu sous l'acronyme « FPA ». Par opposition, la maquette avion représente la direction du nez de l'aéronef en angles de cap et d'assiette. Les principes décrits ci-dessous sont illustrés sur la FPV, mais ils peuvent s'appliquer à la maquette avion si le FPV n'est pas représenté dans l'ADI.

Une des difficultés de la présentation des informations de pilotage dans un système de visualisation de tête est que, lorsque l'utilisateur tourne la tête, si la symbolique « ADI » est représentée classiquement, elle sort de son champ visuel.

Pour pallier cette difficulté, il existe des algorithmes de « parcage » qui ramène en bordure de champ les symboles nécessaires au pilotage. Cependant, le fait de parquer ces symboles a pour effet de leur faire perdre la cohérence de l'information qu'ils portent. Par exemple, dans certaine condition d'attitude de l'aéronef, le vecteur vitesse peut-être parqué au-dessus de la ligne d'horizon alors qu'en réalité, il est situé en dessous. De plus, la représentation du symbole peut ne plus être adaptée à un moment particulier de la mission ou de la phase de vol.

Le procédé selon l'invention ne présente pas ces inconvénients. En effet, l'« indicateur de directeur d'attitude » peut être représenté dans un repère lié au support de tête et, par conséquent, l'utilisateur l'a constamment dans son champ de vision. Plus précisément, l'invention a pour objet un procédé d'affichage d'un « indicateur de directeur d'attitude » dans un système de visualisation de tête pour aéronef tel que défini dans la revendication 1 en annexe.

Avantageusement, l'indicateur de directeur d'attitude comporte un symbole central sous forme de maquette d'avion représentant le vecteur vitesse de l'aéronef, cette maquette comporte un premier cercle central entouré de deux traits droits symétriques appelés ailettes et surmonté d'un troisième trait droit perpendiculaire aux deux traits précédents.

Avantageusement, lorsque le support de tête est orienté dans une direction déterminée faisant, avec la ligne d'horizon et/ou avec le « vecteur vitesse », un angle supérieur à une première valeur déterminée, l'indicateur de directeur d'attitude comporte un symbole représentatif de cette situation.

Avantageusement, le symbole représentatif est un second cercle dont le diamètre angulaire est de quelques degrés, ledit second cercle étant centré sur le premier cercle de la maquette d'avion.

Avantageusement, lorsque le support de tête est orienté dans une direction déterminée faisant avec le « vecteur vitesse », un angle supérieur à une première valeur déterminée, les trois traits de la maquette ont comme point commun le centre du premier cercle.

Avantageusement, lorsque l'angle de roulis dépasse une seconde valeur déterminée, une échelle de roulis apparaît sous forme d'au moins un arc de cercle, le nombre d'arcs ou la dimension des arcs ou l'épaisseur des traits desdits arcs augmentant avec l'augmentation du roulis, lesdits arcs étant centrés sur le premier cercle.

Avantageusement, lorsque l'angle de tangage dépasse une seconde valeur déterminée, un symbole de tangage apparaît sous forme d'un chevron comportant, à l'intérieur de ces deux branches, une échelle défilante, la vitesse de défilement étant représentative de la vitesse de variation du tangage.

L'invention sera mieux comprise et d'autres avantages apparaîtront à la lecture de la description qui va suivre donnée à titre non limitatif et grâce aux figures annexées parmi lesquelles :
La figure 1 représente une vue générale d'un système de visualisation de tête mettant en oeuvre le procédé selon l'invention ;
La figure 2 représente une première variante de la symbologie mise en œuvre dans le procédé selon l'invention ;
La figure 3 représente une seconde variante de la symbologie mise en œuvre dans le procédé selon l'invention ;
La figure 4 représente une troisième variante de la symbologie mise en œuvre dans le procédé selon l'invention ;
La figure 5 représente une quatrième variante de la symbologie mise en œuvre dans le procédé selon l'invention ;
La figure 6 représente une cinquième variante de la symbologie mise en œuvre dans le procédé selon l'invention ;
La figure 7 représente une sixième variante de la symbologie mise en œuvre dans le procédé selon l'invention ;
La figure 8 représente une septième variante de la symbologie mise en œuvre dans le procédé selon l'invention ;
La figure 9 représente une huitième variante de la symbologie mise en œuvre dans le procédé selon l'invention.

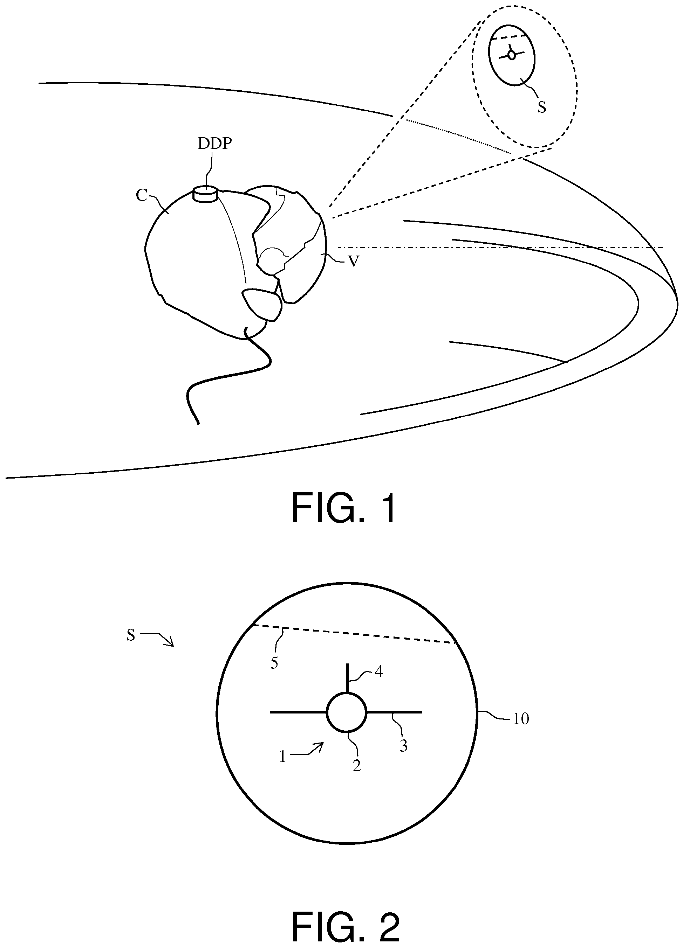

Le système de visualisation de tête selon l'invention est représenté schématiquement en figure 1. Il comporte :
- un support de tête ou un casque C équipé comprenant un ensemble optoélectronique d'affichage V. Cet ensemble de visualisation peut être monoculaire ou binoculaire. Lorsque le support de tête ou le casque est porté par un utilisateur, cet ensemble donne une image collimatée issue d'un afficheur. Cette image est superposée au paysage extérieur par un combineur ou mélangeur optique ;
- un système de détection de posture DDP du support de tête ou du casque permettant de déterminer la position du support ou du casque dans le repère de l'aéronef. Il existe différents systèmes de détection qui sont bien connus de l'homme du métier. On citera les systèmes à détection magnétique dans lesquels un récepteur mesure les composantes d'un champ électromagnétique connu et les systèmes à détection optique comportant un émetteur et un récepteur apte à déterminer la position et l'orientation de cet émetteur par reconnaissance de forme. La position de l'aéronef dans un repère terrestre est elle-même connue au moyen de différents capteurs comme la centrale inertielle de l'aéronef ;
- un ensemble ou un calculateur électronique non représenté sur la figure 1 assurant le calcul et la génération d'une symbologie S superposée sur le paysage extérieur par l'ensemble optoélectronique d'affichage. Cette symbologie comporte généralement les informations de base nécessaires au pilotage comme les différentes indications de la vitesse, de l'altitude et de l'assiette, la position de l'horizon,.... Classiquement, l'ensemble des paramètres définissant l'attitude de l'aéronef est noté « indicateur de directeur d'attitude ». Il est également connu, comme il a été dit, sous l'acronyme « ADI », signifiant « Attitude Director Indicator ». Pour assurer cette fonction, les différents capteurs de l'aéronef fournissent au calculateur les informations nécessaires. Le système de détection d'orientation du casque lui donne les informations de position et d'orientation permettant d'afficher la symbologie soit de façon conforme, c'est-à-dire dans un repère terrestre indépendant des mouvements de l'aéronef et des mouvements du casque, soit de façon non conforme, c'est-à-dire dans un repère lié à l'utilisateur ;
- des moyens de commande, généralement un ou des postes de commande permettant de sélectionner, de modifier ou de valider les informations et les données affichées par le dispositif de visualisation. Ces moyens de commande peuvent également être disposés sur le manche de commande ou être activés par une commande vocale.

Classiquement, l'indicateur de directeur d'attitude est affiché en position conforme. Une des difficultés de la présentation des informations de pilotage dans un système de visualisation de tête est que, lorsque l'utilisateur tourne la tête, si la symbolique « ADI » est représentée classiquement, elle sort de son champ visuel. C'est-à-dire que, sur un mouvement de tête, on peut perdre l'affichage du FPV ou de la ligne d'horizon ou de l'échelle de roulis qui est un élément clé de l'ADI lorsqu'un virage est engagé. Dans le procédé selon l'invention, la représentation du FPV devient, en fonction de la direction de la tête et des paramètres de vol, le support à la symbologie de l'ADI, cette représentation FPV pouvant être liée à un repère terrestre ou au casque. L'indicateur de directeur d'attitude peut donc être affiché localement dans un repère lié au support de tête et dans le champ du dispositif de visualisation.

Le procédé selon l'invention est donc avantageux lorsque l'affichage en position conforme n'est plus possible. Aussi, ce procédé n'est mis en œuvre que, lorsque le support de tête est orienté dans une direction déterminée faisant, avec la ligne d'horizon et/ou avec le « vecteur vitesse », un angle supérieur à une première valeur déterminée. Il est également intéressant de le mettre en œuvre, lorsqu'au moins un des paramètres d'attitude de l'aéronef devient supérieur à une seconde valeur déterminée.

Par ailleurs, il est intéressant que l'ADI selon l'invention ait une « empreinte » visuelle faible. C'est-à-dire qu'il comporte un nombre minimal de symboles. Par conséquent, la symbologie comporte uniquement les symboles indispensables à l'ADI et/ou les symboles représentatifs d'une situation critique.

Dans le premier cas de figure, l'ADI local apparaît lorsque le vecteur vitesse ou la ligne d'horizon deviennent limités, typiquement quand le pilote veut regarder dans une direction qui positionne le vecteur vitesse hors champ. On entend par symbole « limité » un symbole non représenté en position conforme. Lorsque le pilote écarte son regard pour effectuer une autre tâche que le pilotage, la nouvelle représentation de ces paramètres de vols débute avec une empreinte visuelle faible lors de conditions de vol nominales et s'enrichit quand les attitudes de l'aéronef se dégradent.

Dans le second cas de figure, l'ADI local apparaît lorsque les attitudes de l'aéronef deviennent excessives en fonction de seuils paramétrables. Afin de ne pas masquer la vision extérieure du pilote accomplissant potentiellement une autre tâche, le niveau d'empreinte visuelle est graduel et augmente quand les paramètres de l'aéronef se dégradent fortement.

Les figures 2 à 9 illustrent, à titre d'exemples, ces différentes configurations de symbologies S. Pour donner un ordre de grandeur des dimensions angulaires des différentes symbologies vues par le pilote, le cercle 10 qui apparaît sur les figures 2, 3, 4 et 5 a un diamètre angulaire apparent d'environ 5 degrés. Toutes ces figures sont à la même échelle. Les symboles sont essentiellement constitués de traits dont l'épaisseur angulaire est de l'ordre du milliradian ou de quelques milliradians. Ces symboles peuvent être tous représentés en monochrome ou comporter plusieurs couleurs différentes. Généralement, ces symboles sont de couleur verte. La couleur rouge peut être réservée aux symboles critiques.

Toutes les figures 2 à 9 sont centrées sur une maquette d'avion 1. Elle représente le vecteur vitesse de l'aéronef. Cette maquette comporte un premier cercle central 2 entouré de deux traits 3 droits symétriques appelés ailettes et surmonté d'un troisième trait 4 droit perpendiculaire aux deux traits précédents.

Les figures 2 à 5 illustrent le premier cas de figure qui correspond à l'apparition de l'ADI lorsque le vecteur vitesse ou la ligne d'horizon deviennent limités. Ces quatre figures sont toutes entourées du cercle 10 qui apparaît lorsque le vecteur vitesse ou la ligne d'horizon deviennent limités. Ce cercle 10 est centré sur le FPV 1. Sur ces figures, la ligne d'horizon est représentée par une ligne 5 en pointillées.

La figure 2 représente la configuration la plus simple. Elle comporte le FPV 1 et le cercle 10 indiquant que la ligne d'horizon 5 est limitée, la ligne d'horizon est sortie du champ d'affichage. Les trois traits 3 et 4 du FPV représentatifs des ailes et de la dérive sont déployés, indiquant que seule la ligne d'horizon est limitée, le vecteur vitesse ou FPV ayant une valeur nominale. Il est donc toujours affiché dans un repère terrestre. L'absence d'indication de roulis sur cette figure signifie également que celui-ci reste dans des limites nominales. Cette limite est, par exemple, de +/- 10 degrés.

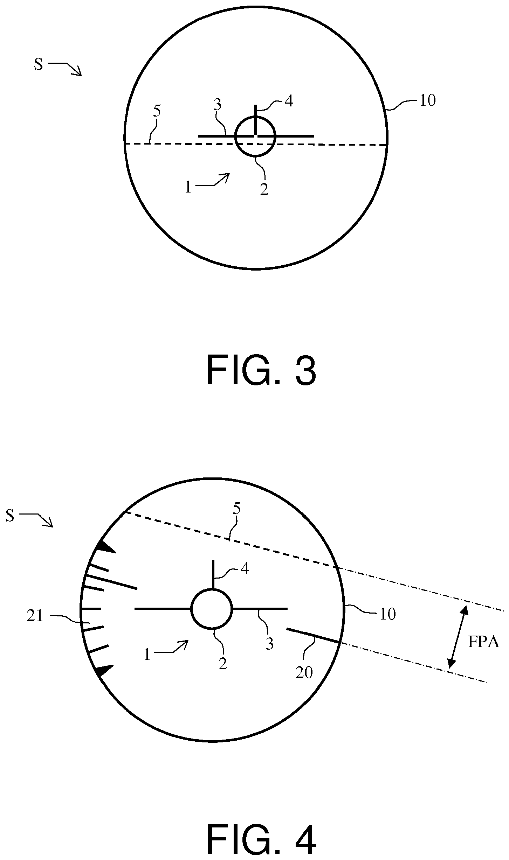

Sur la figure 3, le vecteur vitesse ou FPV a une valeur limitée. Il est affiché en bordure de champ dans la direction où la tête doit tourner pour le « retrouver ». Les trois traits 3 et 4 du FPV représentatifs des ailes et de la dérive sont alors rétractés et passent par le centre du cercle 2. L'absence d'indication de roulis sur cette figure signifie également que celui-ci reste dans des limites nominales.

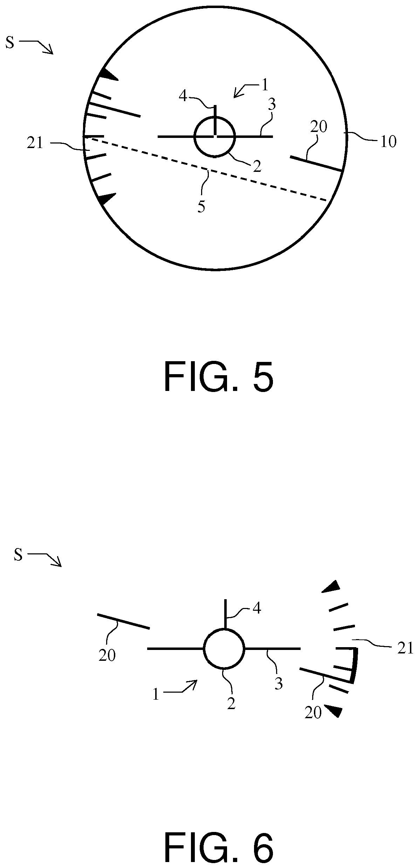

Sur les figures 4 et 5, le roulis est devenu plus important. Deux barres de roulis 20 dont l'inclinaison est représentative de la valeur du roulis apparaissent en périphérie du cercle 10. Une échelle de roulis 21 apparaît également. L'angle d'inclinaison entre la barre d'horizon et les barres de roulis est représentatif de l'angle d'inclinaison du vecteur vitesse par rapport à l'horizontale. Cet angle est connu sous l'acronyme « FPA », signifiant « Flight Path Angle ».

Sur la figure 4, les trois traits 3 et 4 du FPV représentatifs des ailes et de la dérive sont déployés, indiquant que seule la ligne d'horizon est limitée, le vecteur vitesse ou FPV ayant une valeur nominale. Sur la figure 5, le vecteur vitesse ou FPV a une valeur limitée. Les trois traits 3 et 4 du FPV représentatifs des ailes et de la dérive sont alors rétractés.

Les figures 6 à 9 illustrent le second cas de figure qui correspond à l'apparition de l'ADI lorsque les attitudes de l'aéronef deviennent excessives en fonction de seuils paramétrables. Pour plus de clarté, dans ces exemples, le vecteur vitesse et la ligne d'horizon ne sont pas limités et n'apparaissent donc pas sur ces figures.

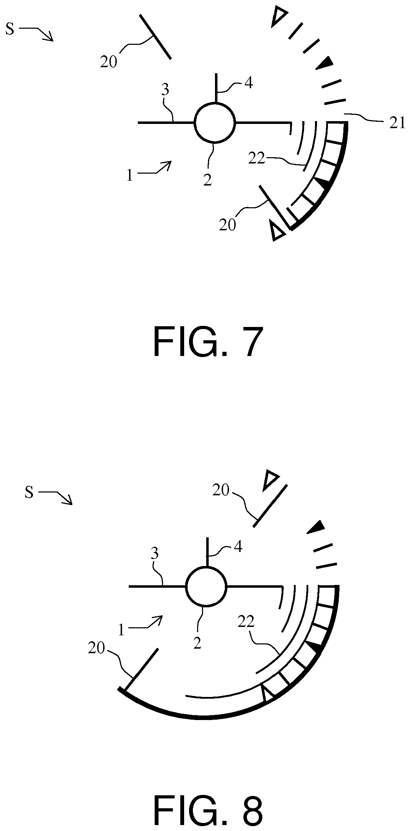

Les figures 6 à 8 illustrent le cas d'un roulis devenant de plus en plus important. Sur la figure 6, le roulis est voisin de 10 degrés. Comme sur la figure 5, les barres 20 et l'échelle de roulis 21 apparaissent. Sur la figure 7, le roulis est supérieur à 30 degrés. L'échelle de roulis est accompagnée de plusieurs arcs de cercle concentriques 22, indiquant au pilote un roulis excessif. Sur la figure 8, le roulis est supérieur à 60 degrés. Les arcs de cercle concentriques 22 se renforcent. Le symbole composé de plusieurs arcs de cercle concentriques permet également de garder la notion du sens de roulis quand il s'approche des valeurs limites.

Ainsi, le nombre d'arcs ou la dimension des arcs ou l'épaisseur des traits desdits arcs augmentent avec l'augmentation du roulis, lesdits arcs étant centrés sur la maquette.

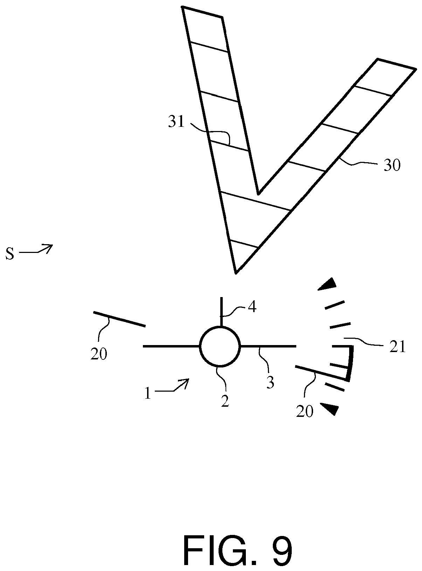

La figure 9 représente la symbologie dans le cas où le tangage de l'aéronef ou « pitch » devient excessif. Lorsque l'angle de tangage dépasse une valeur déterminée, un symbole de tangage apparaît sous forme d'un chevron 30 comportant, à l'intérieur de ces deux branches, une échelle défilante 31, la vitesse de défilement étant représentative de la vitesse de variation du tangage. Cette information donne au pilote un ressenti plus précis de la dynamique de son aéronef lors de manœuvres plus brutales. Si la variation de tangage est très importante, on peut anticiper la vitesse de variation du tangage de façon à rester en deçà des valeurs limites.

Lorsque l'ADI local est affiché, la ligne d'horizon réelle est effacée autour de l'ADI local pour ne pas que le pilote puisse confondre les différents types de représentation, l'une étant conforme et représentée par l'ADI standard et l'autre non-conforme et représenté par l'ADI local.

## Revendications

1. Procédé d'affichage d'un « indicateur de directeur d'attitude » dans un système de visualisation de tête pour aéronef, ledit système de visualisation de tête comprenant :
- un support de tête (C) portant un dispositif de visualisation (V) ;
- une détection de posture (DDP) dudit support de tête ;
- des capteurs de détection des différents paramètres définissant l'attitude dudit aéronef ;
- des moyens de calcul et de génération graphique de ladite attitude dans ledit dispositif de visualisation, l'ensemble des paramètres affichés (S) sous forme de symboles étant noté « indicateur de directeur d'attitude », ledit indicateur de directeur d'attitude étant affiché dans un champ angulaire déterminé, **caractérisé en ce que,** l'indicateur de directeur d'attitude étant affiché dans un repère terrestre ou localement dans un repère lié au support de tête et dans le champ du dispositif de visualisation, l'indicateur de directeur d'attitude est affiché en position conforme en dehors des conditions suivantes :
lorsque le support de tête est orienté dans une direction déterminée faisant, avec la ligne d'horizon et/ou avec le « vecteur vitesse », un angle supérieur à une première valeur déterminée, et/ou
lorsqu'au moins un des paramètres d'attitude de l'aéronef devient supérieur à une seconde valeur déterminée, l'indicateur de directeur d'attitude est affiché dans un repère terrestre ou localement dans un repère lié au support de tête et dans le champ du dispositif de visualisation.

2. Procédé d'affichage selon la revendication 1, **caractérisé en ce que** l'empreinte visuelle de l'indicateur de directeur d'attitude est graduelle et augmente quand les paramètres de l'aéronef se dégradent.

3. Procédé d'affichage selon l'une des revendications 1 ou 2, **caractérisé en ce que** l'indicateur de directeur d'attitude comporte un symbole central (1) sous forme de maquette d'avion représentant le vecteur vitesse de l'aéronef, cette maquette comportant un premier cercle central (2)
entouré de deux traits droits symétriques (3) appelés ailettes et surmonté d'un troisième trait droit (4) perpendiculaire aux deux traits précédents.

4. Procédé d'affichage selon l'une des revendications 1 ou 2, **caractérisé en ce que**, lorsque le support de tête est orienté dans une direction déterminée faisant, avec la ligne d'horizon et/ou avec le « vecteur vitesse », un angle supérieur à une première valeur déterminée, l'indicateur de directeur d'attitude comporte un symbole (10) représentatif de cette situation.

5. Procédé d'affichage selon la revendication 4, **caractérisé en ce que**, le symbole représentatif est un second cercle dont le diamètre angulaire est de quelques degrés, ledit second cercle étant centré sur le premier cercle de la maquette d'avion.

6. Procédé d'affichage selon l'une des revendications 1 ou 2, **caractérisé en ce que**, lorsque le support de tête est orienté dans une direction déterminée faisant avec le « vecteur vitesse », un angle supérieur à une première valeur déterminée, les trois traits de la maquette ont comme point commun le centre du premier cercle.

7. Procédé d'affichage selon l'une des revendications 1 ou 2, **caractérisé en ce que**, lorsque l'angle de roulis dépasse une seconde valeur déterminée, une échelle de roulis (21) apparaît sous forme d'au moins un arc de cercle, le nombre d'arcs ou la dimension des arcs ou l'épaisseur des traits desdits arcs augmentant avec l'augmentation du roulis, lesdits arcs étant centrés sur le premier cercle.

8. Procédé d'affichage selon l'une des revendications 1 ou 2, **caractérisé en ce que**, lorsque l'angle de tangage dépasse une seconde valeur déterminée, un symbole de tangage apparaît sous forme d'un chevron (30) comportant, à l'intérieur de ces deux branches, une échelle défilante (31), la vitesse de défilement étant représentative de la vitesse de variation du tangage.

## Patentansprüche

1. Anzeigeverfahren eines "Fluglagesteuerungs-Anzeigers" in einem Head-up-Anzeigesystem für ein Luftfahrzeug, wobei das Head-up-Anzeigesystem Folgendes umfasst:
- einen Kopfhalter (C), welcher ein Anzeigesystem (V) trägt;
- ein Haltungs-Detektionssystem (DDP) zur Detektion der Haltung des Kopfhalters;
- Detektionssensoren zur Detektion von unterschiedlichen Parametern, welche die Fluglage des Luftfahrzeugs definieren;
- Mittel zur Berechnung und zur grafischen Erzeugung der Fluglage in der Anzeigevorrichtung, wobei die Gruppe der in Form von Symbolen angezeigten Parameter (S) als "Fluglagesteuerungs-Anzeiger" bezeichnet wird, wobei der Fluglagesteuerungs-Anzeiger in einem bestimmten Winkelfeld angezeigt wird,
**dadurch gekennzeichnet, dass**, da der Fluglagesteuerungs-Anzeiger in einem terrestrischen Koordinatensystem oder lokal in einem kopfhalterspezifischen Koordinatensystem und in dem Feld der Anzeigevorrichtung angezeigt wird, der Fluglagesteuerungs-Anzeiger ausgenommen unter folgenden Bedingungen in konformer Position angezeigt wird:
wenn der Kopfhalter in eine bestimmte Richtung ausgerichtet ist, welche mit der Horizontlinie und/oder mit dem "Geschwindigkeitsvektor" einen Winkel bildet, welcher einen ersten vorbestimmten Wert überschreitet, und/oder
wenn mindestens einer der Fluglageparameter des Luftfahrzeugs einen zweiten bestimmten Wert überschreitet, wird der Fluglagesteuerungs-Anzeiger in einem terrestrischen Koordinatensystem oder lokal in einem kopfhalterspezifischen Koordinatensystem und in einem Feld der Anzeigevorrichtung angezeigt.

2. Anzeigeverfahren nach Anspruch 1, **dadurch gekennzeichnet, dass** der visuelle Abdruck des Fluglagesteuerungs-Anzeigers graduell ist und sich erhöht, wenn die Parameter des Luftfahrzeugs sich verschlechtern.

3. Anzeigeverfahren nach einem der Ansprüche 1 oder 2, **dadurch gekennzeichnet, dass** der Fluglagesteuerungs-Anzeiger ein mittleres Symbol (1) in Form eines Flugzeugmodells umfasst, welches den Geschwindigkeitsvektor des Luftfahrzeugs darstellt, wobei das Modell einen ersten mittleren Kreis (2) umfasst, umgeben von zwei geraden symmetrischen Strichen (3), genannt Flügel, und darüber befindlich einen dritten geraden Strich (4), welcher rechtwinklig zu den beiden vorhergehenden Strichen ist.

4. Anzeigeverfahren nach einem der Ansprüche 1 oder 2, **dadurch gekennzeichnet, dass**, wenn der Kopfhalter in eine bestimmte Richtung ausgerichtet ist, welche mit der Horizontlinie und/oder mit dem "Geschwindigkeitsvektor" einen Winkel bildet, welcher einen ersten bestimmten Wert überschreitet, der Fluglagesteuerungs-Anzeiger ein Symbol (10) umfasst, welches diese Situation darstellt.

5. Anzeigeverfahren nach Anspruch 4, **dadurch gekennzeichnet, dass** das darstellende Symbol ein zweiter Kreis ist, dessen Winkeldurchmesser einige Grad beträgt, wobei der zweite Kreis auf den ersten Kreis des Flugzeugmodells zentriert ist.

6. Anzeigeverfahren nach einem der Ansprüche 1 oder 2, **dadurch gekennzeichnet, dass**, wenn der Kopfhalter in eine bestimmte Richtung ausgerichtet ist, welche mit dem "Geschwindigkeitsvektor" einen Winkel bildet, welcher einen ersten bestimmten Wert überschreitet, die drei Striche des Modells als einen gemeinsamen Punkt den Mittelpunkten des ersten Kreises aufweisen.

7. Anzeigeverfahren nach einem der Ansprüche 1 oder 2, **dadurch gekennzeichnet, dass**, wenn der Rollwinkel einen zweiten bestimmten Wert überschreitet, eine Roll-Skala (21) in Form von mindestens einem Kreisbogen erscheint, wobei die Anzahl der Kreisbögen oder die Abmessung der Kreisbögen oder die Strichdicke der Kreisbögen sich mit zunehmendem Rollen erhöht, wobei die Kreisbögen auf den ersten Kreis zentriert sind.

8. Anzeigeverfahren nach einem der Ansprüche 1 oder 2, **dadurch gekennzeichnet, dass**, wenn der Nickwinkel einen zweiten bestimmten Wert überschreitet, ein Nick-Symbol in Form eines Fischgrätmusters (30) erscheint, welches innerhalb seiner beiden Zweige eine vorbeilaufende Skala (31) umfasst, wobei die Durchlaufgeschwindigkeit die Nickvariation darstellt.

## Claims

1. A method for displaying an "attitude director indicator" in a heads-up display system for an aircraft, said heads-up display system comprising:
- a head support (C) supporting a display device (V);
- a posture detection system (DDP) for detecting the posture of said head support;
- sensors for detecting various parameters defining the attitude of said aircraft;
- means for computing and graphically generating said attitude in said display device, the set of parameters (S) displayed in the form of symbols being denoted "attitude director indicator", said attitude director indicator being displayed in a determined angular field,
**characterised in that**, with the attitude director indicator being displayed in a terrestrial reference or locally in a reference associated with the head support and in the field of the display device, the attitude director indicator is displayed in the correct position except under the following conditions:
when the head support is oriented in a determined direction forming, with the line of horizon and/or with the "speed vector", an angle that is greater than a first determined value; and/or
when at least one of the attitude parameters of the aircraft exceeds a second determined value, the attitude director indicator is displayed in a terrestrial reference or locally in a reference associated with the head support and in the field of the display device.

2. The display method according to claim 1, **characterised in that** the visual footprint of the attitude director indicator is gradual and increases when the parameters of the aircraft deteriorate.

3. The display method according to one of claims 1 or 2, **characterised in that** the attitude director indicator comprises a central symbol (1) in the form of an aeroplane model representing the speed vector of the aircraft, said model comprising a first central circle (2) surrounded by two symmetrical straight lines (3) called wings and surmounted by a third straight line (4) perpendicular to the two preceding lines.

4. The display method according to one of claim 1 or 2, **characterised in that**, when the head support is oriented in a determined direction forming, with the line of horizon and/or with the "speed vector", an angle that is greater than a first determined value, the attitude director indicator comprises a symbol (10) representing this situation.

5. The display method according to claim 4, **characterised in that**, the representative symbol is a second circle, the angular diameter of which is a few degrees, said second circle being centred on the first circle of the aeroplane model.

6. The display method according to claim 1 or 2, **characterised in that**, when the head support is oriented in a determined direction forming, with the "speed vector", an angle that is greater than a first determined value, the three lines of the model have the centre of the first circle as a common point.

7. The display method according to one of claim 1 or 2, **characterised in that**, when the roll angle exceeds a second determined value, a roll scale (21) appears in the form of at least one arc of a circle, with the number of arcs or the dimension of the arcs or the thickness of the lines of said arcs increasing with the increase of the roll, said arcs being centred on the first circle.

8. The display method according to one of claim 1 or 2, **characterised in that**, when the pitch angle exceeds a second determined value, a pitch symbol appears in the form of a chevron (30) comprising, inside its two branches, a scrolling scale (31), with the moving speed representing the speed of variation of the pitch.
